# EUROPEAN PATENT APPLICATION

(11) **EP 3 671 132 A1**
(43) Date of publication of application: **24.06.2020**
(21) Application number: 19210408.1
(22) Date of filing: 20.11.2019
(51) Int. Cl.: G01D 5/245, G01D 5/246, G01D 5/248

(54) **SHAFT MONITORING SYSTEM**

(30) Priority: 20.12.2018 GB 201820825
(71) Applicant: Rolls-Royce plc, London N1 9FX (GB)
(72) Inventor: Davies, Neil, Derby, Derbyshire DE24 8BJ (GB); Boden, Mark, Derby, Derbyshire DE24 8BJ (GB); Broadhead, Peter, Derby, Derbyshire DE24 8BJ (GB); King, Jonathan, Derby, Derbyshire DE24 8BJ (GB)
(74) Representative: Rolls-Royce plc

(57) **Abstract**

A monitoring system for monitoring the axial position of a rotating shaft is provided. The system includes first and second, axially adjacent phonic wheels which are mounted coaxially to the shaft for rotation therewith. The first and second phonic wheels respectively have first and second circumferential rows of detectable features. The system further includes a sensor configured to detect the passage of the first row of detectable features by generating a first alternating measurement signal component, and to detect the passage of the second row of detectable features by generating a second alternating measurement signal component. The first and second rows of detectable features are configured such that the first and second alternating measurement signal components have distinguishably different frequencies and/or such that the first alternating measurement signal component generated by the sensor when the sensor is axially aligned with the first row has a distinguishably different amplitude to the second alternating measurement signal component generated by the sensor when the sensor is axially aligned with the second row. The sensor is positioned relative to the first and second phonic wheels such that axial displacement of the shaft causes the signal generated by sensor to contain less of the first alternating measurement signal component and more of the second alternating measurement signal component whereby the axial position of the shaft can be monitored.

## Description

The present disclosure relates to a shaft monitoring system, and in particular, to a monitoring system for monitoring the axial position of a rotating shaft.

In a gas turbine engine, impending or actual failure of a shaft or of an axial location bearing of the shaft can be accompanied by axial movement of the shaft. Thus it is desirable to monitor the axial position of such a shaft so that suitable automatic or crew-initiated corrective action, e.g. engine shut down, can be performed to prevent the failure progressing.

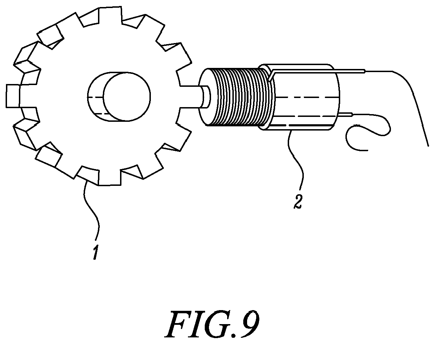

Conventionally, phonic wheels and associated sensors are used to measure shaft speed. For example, Figure 9 shows schematically a phonic wheel 1 having a circumferential row of teeth, and a variable reluctance sensor 2 which detects the passage of the row of teeth by generating an alternating measurement signal. As each tooth of the phonic wheels passes close to the front face of a pole piece of the sensor there is a change in the magnetic flux experienced by a conductive wire wrapped around the pole piece, owing to the change in the reluctance of the magnetic circuit consisting of the pole piece, the phonic wheel and the air gap between the two.

The present invention is at least partly based on a realisation that such an arrangement can be adapted to monitoring the axial position of the shaft.

According to a first aspect there is provided a monitoring system for monitoring the axial position of a rotating shaft, the system including:
first and second, axially adjacent, phonic wheels which are formed from respective axially adjacent portions of a unitary annular body and mounted coaxially to the shaft for rotation therewith, the first phonic wheel having a first circumferential rows of detectable features, and the second phonic wheel having a second circumferential row of detectable features, wherein the first and second circumferential rows of detectable features are first and second circumferential rows of teeth; and
a sensor configured to detect the passage of the first row of detectable features by generating a first alternating measurement signal component, and to detect the passage of the second row of detectable features by generating a second alternating measurement signal component;
wherein the first and second rows of detectable features are configured such that the first and second alternating measurement signal components have distinguishably different frequencies and/or such that the first alternating measurement signal component generated by the sensor when the sensor is axially aligned with the first row has a distinguishably different amplitude to the second alternating measurement signal component generated by the sensor when the sensor is axially aligned with the second row; and
wherein the sensor is positioned relative to the first and second phonic wheels such that axial displacement of the shaft causes the signal generated by the sensor to contain less of the first alternating measurement signal component and more of the second alternating measurement signal component whereby the axial position of the shaft can be monitored.

Thus advantageously a single sensor suitably located relative to the phonic wheels can provide a single signal which is used to detect shaft axial displacement. In addition, the sensor can be used to measure shaft speed based on e.g. the first alternating measurement signal component.

Optional features of the present disclosure will now be set out. These are applicable singly or in any combination with any aspect of the present disclosure.

Conveniently, the sensor may be a magnetic sensor that detects a varying reluctance caused by the passage of the rows of detectable features.

The first and second phonic wheels may be initially formed with identical rows of teeth (e.g. in a first machining operation), and the teeth of one of the rows being subsequently machined (e.g. in a second machining operation) to reduce the number of teeth and/or change the shape of the teeth.

In a normal operating mode of the shaft, the overall signal may substantially contain just the first alternating measurement signal component. Similarly, in a failure mode of the shaft, the overall signal may substantially contain just the second alternating measurement signal component. Thus, as regards axial position monitoring, the sensor can effectively have a binary output, i.e. it can change from providing just the first alternating measurement signal component to providing just the second alternating measurement signal component as the shaft transitions from the normal operating mode to the failure mode.

According to a second aspect there is provided a gas turbine engine for an aircraft comprising:
an engine core comprising a turbine, a compressor, and a core shaft connecting the turbine to the compressor; and
a monitoring system according to the first aspect for monitoring the axial position of the core shaft, the first and second, axially adjacent, phonic wheels being mounted coaxially to the core shaft for rotation therewith.

According to a third aspect there is provided a gas turbine engine for an aircraft comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan via an output shaft so as to drive the fan at a lower rotational speed than the core shaft;
a thrust shaft that extends through the gearbox to connect the fan to an axial location bearing mounted on the core shaft, thereby relieving the output shaft of responsibility for axially locating the fan relative to the core shaft; and
a monitoring system according to the first aspect for monitoring the axial position of the thrust shaft, the first and second, axially adjacent phonic wheels being mounted coaxially to the thrust shaft for rotation therewith.

The gas turbine engine of the second or third aspect may further comprise an engine electronic controller which is operatively connected to the monitoring system to receive the overall signal and is configured to monitor therefrom the axial position of the shaft to which the first and second phonic wheels are mounted. In this case, the first and second rows may be configured such that the first and second alternating measurement signal components have distinguishably different frequencies. The engine electronic controller may then convert the overall signal into a shaft speed, the engine electronic controller monitoring the axial position of the shaft to which the first and second phonic wheels are mounted on the basis of an apparent change in speed of the shaft.

According to a fourth aspect there is provided the use of the monitoring system of the first aspect for monitoring the axial position of a rotating shaft (e.g. the core shaft of the second aspect or a thrust shaft of the third aspect) to which the first and second phonic wheels are mounted. A related aspect provides a method of monitoring the axial position of the rotating shaft, the method comprising:
providing the monitoring system of the first aspect, the first and second phonic wheels being mounted to the rotating shaft; and
using the signal generated by the monitoring system to monitor the axial position of the shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** shows an example of a unitary annular body providing first and second phonic wheels;
**Figure 5** shows how the output signal generated by a probe varies depending on the relative position of the probe and the phonic wheels of Figure 4;
**Figure 6** shows a variant example of a unitary annular body providing first and second phonic wheels;
**Figure 7** shows how the output signal generated by a probe varies depending on the relative position of the probe and the phonic wheels of Figure 6;
**Figure 8** shows schematically the front end of an interconnecting shaft joining the low pressure turbine to the fan of a non-geared turbofan; and
**Figure 9** shows schematically a conventional phonic wheel having a circumferential row of teeth, and a variable reluctance sensor.

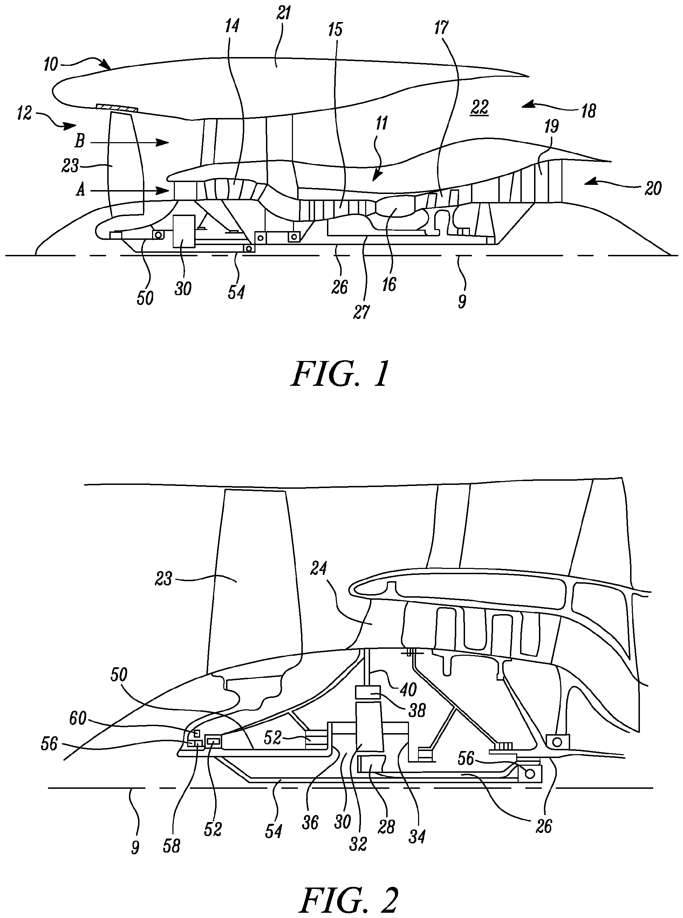

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

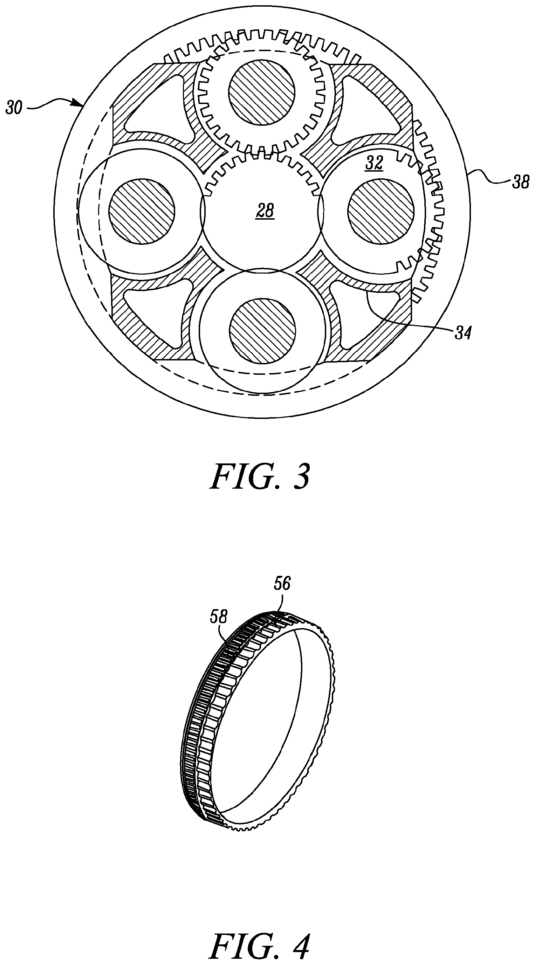

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In the exemplary arrangement for a geared fan gas turbine engine 10 is shown in Figure 2, the output shaft 50 from the epicyclic gear arrangement 30 is radially located at each end by sets of roller bearings 52. These allow the shaft to transmit torque to the fan 23, but not provide significant axial retention functionality. To axially retain the output shaft 50 and the fan 23, a separate thrust shaft 54 extends from a set of ball bearings 56 attached to the interconnecting shaft 26, through the centre of the sun gear 28 to join to the output shaft 50. Thus torque transmission and axial retention responsibilities are split between the output shaft 50 and the thrust shaft 54.

Failure of the thrust shaft 54 or the ball bearings 56 can endanger the engine, and thus it is desirable to have early detection of any axial displacement of the shaft 54. Accordingly, the engine also has a monitoring system for monitoring the axial position of the shaft. This system comprises first 56 and second 58 axially adjacent phonic wheels. Conveniently these can be mounted at the front of the output shaft 50 coaxially with the thrust shaft 54. At this location they co-rotate with the entire assembly of the fan 23, output shaft 50 and thrust shaft 54.

**Figure 4** shows an example of the first 56 and second 58 phonic wheels in more detail. Conveniently, they can be part of a unitary annular body. Each wheel has a circumferential row of detectable features, which in this case are teeth, the second row of the second phonic wheel 58 having twice as many teeth as the first row of the first phonic wheel 56. Also, as drawn, the height of the teeth in the second row is lower than that in the first row, although this height difference could be the other way round or there could be no height difference. The system further has a sensor for detecting the passage of the teeth in form of a reluctance probe 60 which is mounted to a stationary structure of the engine.

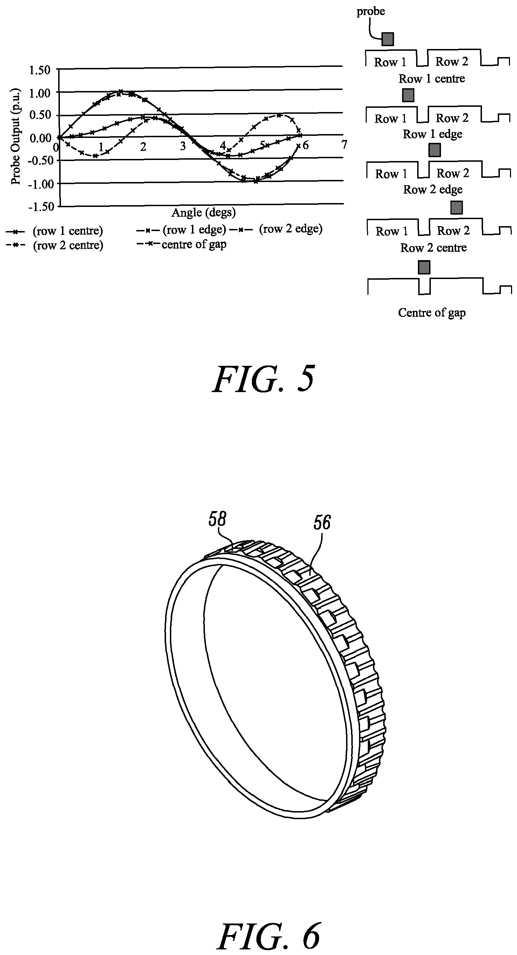

**Figure 5** shows how the output signal generated by the probe 60 varies depending on the relative position of the probe and the wheels 56, 58 of Figure 4. In normal operation of the thrust shaft 54, the probe sits centrally above the first row of teeth of the first phonic wheel 56. This corresponds to zero axial displacement of the shaft 54. The signal is substantially formed by just a first alternating measurement signal component whose frequency and amplitude is determined by the number and height of the teeth in the first row. At maximum forward axial displacement, due to failure of the shaft 54 or the bearings 56, the probe sits centrally above the second row of teeth of the second phonic wheel 58, and the signal is substantially formed (i.e. is dominated) by just a second alternating measurement signal component whose doubled frequency and reduced amplitude is determined by the number and height of the teeth in the second row. The signal is typically received by an engine electronic controller (EEC) of the engine, which can use the signal as a measure of the rotational speed of the assembly of the fan 23, output shaft 50 and thrust shaft 54. As a doubling of the speed of the assembly relative to e.g. the speed of the corresponding low pressure turbine 19 is physically impossible, the detection of such an event by the EEC can be used to alert the crew of thrust shaft failure or to initiate an automatic response so that appropriate engine management actions are taken.

Figure 5 also shows the output signal generated by the probe 60 for intermediate axial displacements. Thus at a displacement in which the probe is still above but at the edge of the first row, the signal is substantially formed by just the first alternating measurement signal component. Similarly at a larger displacement in which the probe is above but at the edge of the second row, the signal is substantially formed by just the second alternating measurement signal component. However, at an intermediate displacement in which the probe is above a small gap that separates the first row from the second row, the signal is a combination of the two components. In other words, for displacements which are greater than this intermediate displacement, the second component dominates and an additional zero crossing occurs, and thus the probe effectively provides a binary output as regards detection of axial displacement of the shaft 54.

**Figure 6** shows in detail a variant example of the first 56 and second 58 phonic wheels. Again the wheels are part of unitary annular body, and each wheel has a circumferential row of teeth. However, now the second row of the second phonic wheel 58 having half the number of teeth as the first row of the first phonic wheel 56, and the height of the teeth in the second row is the same as that in the first row. This variant has advantages in terms of ease of manufacture. In particular, the body can initially be machined to have a single row of teeth extending across both wheels. One of the wheels (in this example the second wheel) can then be machined (e.g. milled) to remove every other tooth. This combination of operations (machining to form teeth, and milling to remove teeth) is simpler to perform than two separate machining operation to form to two different rows of teeth.

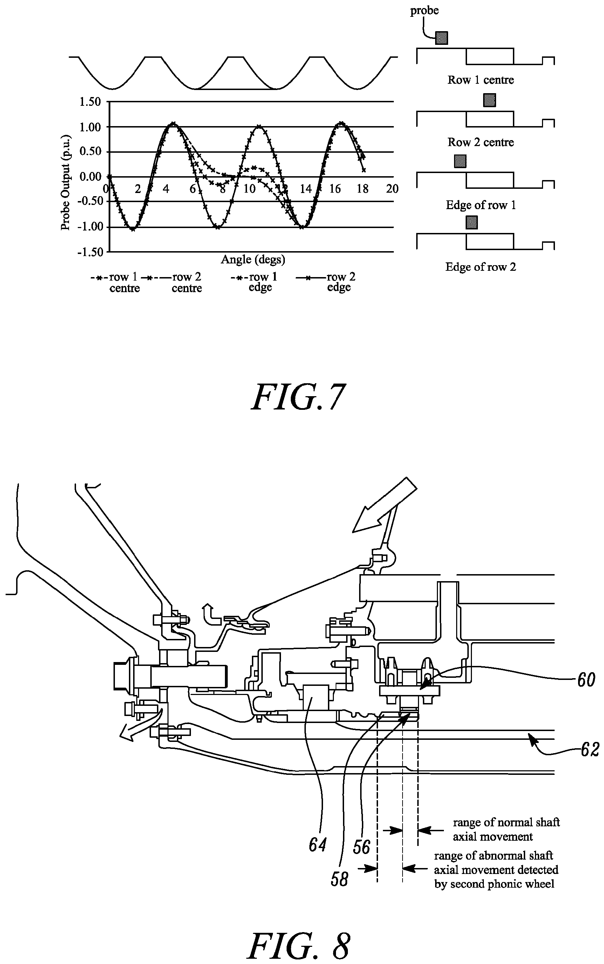

**Figure 7** shows how the output signal generated by the probe 60 varies depending on the relative position of the probe and the wheels 56, 58 of Figure 6. In this case, when the probe is over the second row, the number of zero crossings halves, which can be detected by EEC as a reduction in speed of the assembly of the fan 23, output shaft 50 and thrust shaft 54.

In the above examples, the number of zero crossings (i.e. change in frequency) in the output signal is measured to monitor shaft axial position. However, another possibility in the example of Figures 4 and 5 is to measure output signal amplitude, with the axial displacement being detected when a step change in amplitude (in this case a halving) occurs.

Although described above for monitoring the axial position of the assembly of the fan 23, output shaft 50 and thrust shaft 54, the monitoring system has wider applicability in gas turbine engines, and is not limited to use in geared fan gas turbine engine. For example, it can be used to monitoring the axial position of any interconnecting shaft by which a turbine drives a compressor (e.g. interconnecting shafts 26, 27 in Figure 1). Typically these interconnecting shafts have a set of ball bearings and a set of roller bearings. Figure 8 shows schematically the front end of the interconnecting shaft 62 joining the low pressure turbine to the fan of a non-geared turbofan. A front set of roller bearings 64 radially locates the shaft and a rear set of ball bearings (off to the right and thus not shown in Figure 8) axially locates the shaft. The axially adjacent phonic wheels 56, 58 of the monitoring system are mounted coaxially to the shaft from an extension to the inner case of the roller bearings, and the reluctance probe 60 is mounted to a stationary structure of the engine above the first wheel 56. The thrust load on the ball bearings is rearwards and thus failure of the bearings causes the shaft 62 to move in that direction such that the shaft moves rearwards. As a result, the reluctance probe 60 arrives above the second wheel 58, and the change in the output signal of the probe is detected by the engine's EEC.

In other engine configurations, the thrust load on the ball bearings can be forwards. In such cases, the second wheel phonic 58 wheel can be arranged on the other side of the first phonic wheel 56.

A suitably adapted monitoring system can also be used to detect failure of the interconnecting shaft 62, although that may not be necessary if the engine has other systems for detecting loss of torque-transmission capability in the shaft.

Although described above in relation to monitoring a thrust shaft (Figures 1 to 7) and the fan/compressor end of an interconnecting shaft (Figure 8), the monitoring system may also be used at other locations in the engine, e.g. for monitoring the axial position of an interconnecting shaft at its turbine section end.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A monitoring system for monitoring the axial position of a rotating shaft (54, 62), the system including:
first (56) and second (58), axially adjacent, phonic wheels which are formed from respective axially adjacent portions of a unitary annular body and mounted coaxially to the shaft (54, 62) for rotation therewith, the first phonic wheel (56) having a first circumferential row of detectable features, and the second phonic wheel (58) having a second circumferential row of detectable features, wherein the first and second circumferential rows of detectable features are first and second circumferential rows of teeth; and
a sensor (60) configured to detect the passage of the first row of detectable features by generating a first alternating measurement signal component, and to detect the passage of the second row of detectable features by generating a second alternating measurement signal component;
wherein the first and second rows of detectable features are configured such that the first and second alternating measurement signal components have distinguishably different frequencies and/or such that the first alternating measurement signal component generated by the sensor when the sensor is axially aligned with the first row has a distinguishably different amplitude to the second alternating measurement signal component generated by the sensor when the sensor is axially aligned with the second row; and
wherein the sensor (60) is positioned relative to the first (56) and second (58) phonic wheels such that axial displacement of the shaft (54, 62) causes the signal generated by the sensor to contain less of the first alternating measurement signal component and more of the second alternating measurement signal component whereby the axial position of the shaft can be monitored.

2. The monitoring system according to claim 1, wherein the sensor (60) is a magnetic sensor that detects a varying reluctance caused by the passage of the rows of detectable features.

3. The monitoring system according to claim 1 or claim 2, wherein the first (56) and second (58) phonic wheels are initially formed with identical rows of teeth, and the teeth of one of the rows being subsequently machined to reduce the number of teeth and/or change the shape of the teeth.

4. The monitoring system according to any one of the previous claims, wherein in a normal operating mode of the shaft, the overall signal substantially contains just the first alternating measurement signal component.

5. The monitoring system according to any one of the previous claims, wherein in a failure mode of the shaft, the overall signal substantially contains just the second alternating measurement signal component.

6. A gas turbine engine (10) for an aircraft comprising:
an engine core (11) comprising a turbine (19), a compressor (14), and a core shaft (62) connecting the turbine to the compressor; and
a monitoring system according to any one of the previous claims for monitoring the axial position of the core shaft (62), the first (56) and second (58), axially adjacent, phonic wheels being mounted coaxially to the core shaft for rotation therewith.

7. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan via an output shaft (50) so as to drive the fan (23) at a lower rotational speed than the core shaft (26);
a thrust shaft (54) that extends through the gearbox (30) to connect the fan (23) to an axial location bearing (56) mounted on the core shaft (26), thereby relieving the output shaft (50) of responsibility for axially locating the fan relative to the core shaft; and
a monitoring system according to any one of claims 1 to 5 for monitoring the axial position of the thrust shaft (54), the first (56) and second (58), axially adjacent, phonic wheels being mounted coaxially to the thrust shaft for rotation therewith.

8. The gas turbine engine according to claim 6 or claim 7, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

9. The gas turbine engine according to any one of claims 6 to 8, further comprising:
an engine electronic controller which is operatively connected to the monitoring system to receive the overall signal and is configured to monitor therefrom the axial position of the shaft to which the first and second phonic wheels are mounted.

10. The gas turbine engine according to claim 9, wherein the first and second rows are configured such that the first and second alternating measurement signal components have distinguishably different frequencies, and the engine electronic controller converts the overall signal into a shaft speed, the engine electronic controller monitoring the axial position of the shaft to which the first and second phonic wheels are mounted on the basis of an apparent change in speed of the shaft.

11. Use of the monitoring system of any one of claims 1 to 5 for monitoring the axial position of a rotating shaft (54, 62) to which the first (56) and second (58) phonic wheels are mounted.
